# FASCICULE DE BREVET EUROPEEN

(11) **EP 3 230 045 B1**
(45) Date de publication et mention de la délivrance du brevet: **30.10.2019**
(21) Numéro de dépôt: 15823630.7
(22) Date de dépôt: 09.12.2015
(51) Int. Cl.: B29C 67/00

(54) **PROCÉDÉ DE FABRICATION D'UNE PIÈCE PAR AJOUT DE MATIÈRE**
VERFAHREN ZUR HERSTELLUNG EINES TEILS DURCH GENERATIVE FERTIGUNG
METHOD FOR PRODUCING A PART BY ADDITIVE MANUFATURING

(30) Priorité: 12.12.2014 FR 1462347
(43) Date de publication de la demande: 18.10.2017
(73) Titulaire: Compagnie Plastic Omnium, 69007 Lyon (FR)
(72) Inventeur: THOMAS, Jean-Luc, 01800 Meximieux (FR)
(74) Mandataire: Andrieux, Benoît
(86) Numéro de dépôt international: PCT/FR2015/053396
(87) Numéro de publication internationale: WO 2016/092215

(56) Documents cités:
- EP-A1- 2 801 512
- WO-A1-2013/004245
- WO-A1-2014/193961
- DE-A1-102007 009 277
- DE-A1-102010 049 195
- US-A1- 2008 006 966

## Description

L'invention concerne un procédé de fabrication de pièces automobiles en matière plastique, telles que des pièces de carrosserie extérieures ou intérieures.

De manière connue, une pièce automobile en matière plastique est fabriquée par moulage. Elle peut ensuite subir un traitement de surface et être stockée.

Selon les fonctions de cette pièce, il peut être nécessaire de lui ajouter des éléments de renfort afin qu'elle ne se déforme pas. On peut aussi lui ajouter des éléments fonctionnels, tels que des éléments permettant d'accrocher la pièce sur la structure du véhicule, des éléments permettant d'y accrocher des câbles des capteurs et des détecteurs électroniques et autres pièces plastiques de décoration. Ces éléments sont généralement moulés séparément et stockés.

Ensuite, les éléments sont rapportés, par exemple, à l'aide d'agrafes, par collage ou par soudage sur les pièces, selon les besoins de chaque client.

Ainsi, un grand nombre de pièce et d'éléments différents sont stockés, référencés et manipulés afin de pouvoir répondre à la demande d'un client. Un procédé de fabrication d'une pièce en matière plastique par impression tridimensionnelle d'une deuxième partie directement sur une première partie est divulgué par le document EP2801512A1.

L'invention a notamment pour but de simplifier le procédé de fabrication de pièce automobile notamment en simplifiant le stockage et la manutention des éléments qui y sont rapportés.

A cet effet, l'invention a pour objet un procédé de fabrication d'une pièce en matière plastique pour véhicule automobile, ladite pièce comportant au moins une première partie sur laquelle est rapportée au moins une deuxième partie, dans lequel on fabrique la première partie, le procédé étant caractérisé en ce qu'on fabrique la deuxième partie de la pièce en matière plastique par impression tridimensionnelle directement sur la première partie de la pièce.

Ainsi, le procédé permettant de fabriquer directement la deuxième partie de la pièce sur la première partie de la pièce, cela évite toutes les opérations liées au stockage de la deuxième partie, c'est-à-dire notamment de la ranger, de la référencer et de la manipuler.

Ainsi, la deuxième partie ne requiert pas d'être fixée par collage, soudage ou agrafage sur la première partie. Il n'est donc pas nécessaire de prévoir d'étapes de montage supplémentaires.

La deuxième partie étant fabriquée par impression tridimensionnelle, la structure de la deuxième partie peut être modifiée très facilement. Elle peut être adaptée en fonction des options choisies par le client. Ce procédé permet donc une très grande flexibilité dans la géométrie et le nombre des parties rapportées sur la première partie de la pièce.

Ainsi, pour des pièces produites en nombre limité, ce procédé permet d'éviter les coûts fixes liés à la production d'un moule spécifique pour chaque partie que l'on souhaite rapporter sur la première partie de la pièce afin de répondre aux demandes de personnalisation d'une pièce par un client.

Grâce à ce procédé, on peut également envisager de produire des pièces de rechanges sans avoir à conserver tous les moules pour fabriquer chaque partie de la pièce en matière plastique.

Le procédé de fabrication et la pièce obtenue par ce procédé peuvent en outre comporter l'une ou plusieurs des caractéristiques suivantes, prises seules ou en combinaison.

Selon l'invention, la première partie de la pièce comporte au moins une zone d'accroche mécanique de la deuxième partie sur la première partie. L'accrochage entre la première et la deuxième partie de la pièce étant mécanique, il est possible de rapporter une deuxième partie dont la matière plastique est différente de la matière plastique de la première partie. On peut donc s'affranchir des problèmes liés à la compatibilité des matières des deux parties entre elles qui peuvent donc être de natures différentes.

Selon l'invention, la zone d'accroche mécanique comporte un réseau tridimensionnel de nervures. La deuxième partie de la pièce est donc bloquée dans au moins deux directions. Ce réseau tridimensionnel de nervures peut être relativement complexe et l'emboîtement de la première partie de la pièce avec la deuxième partie de la pièce lors de son impression tridimensionnelle permet également un blocage des deux parties l'une par rapport à l'autre dans la troisième direction.

On peut également prévoir que la première partie de la pièce comporte au moins deux zones d'accroche, chaque zone d'accroche définissant une surface et une normale à cette surface, les deux normales n'étant pas parallèles entre elles. Ainsi, on renforce ainsi le blocage de la deuxième partie de la pièce par rapport à la première partie dans la troisième direction pour chaque zone d'accroche.

Par ailleurs, la deuxième partie de la pièce peut comprendre un élément fonctionnel et/ou un élément de renfort. On peut ainsi augmenter la résistance mécanique de la pièce à la déformation sur une partie de sa surface ou localement, selon le besoin, et/ou prévoir des éléments fonctionnels tels que des éléments permettant d'accrocher la pièce sur la structure du véhicule ou des éléments permettant d'y accrocher des câbles, capteurs et autres composants de décoration ou de style tels qu'un enjoliveur peint ou chromé, par exemple.

Selon l'invention, pour fabriquer la première partie de la pièce le procédé comporte les étapes suivantes :
- on fabrique au moins un pavé métallique comportant un réseau tridimensionnel de nervures qui sont complémentaires des nervures du réseau tridimensionnel de la première partie,
- on dispose le pavé métallique dans un moule à l'endroit de la première partie où on désire former le réseau tridimensionnel,
- on moule la première partie de la pièce.

Cela permet de personnaliser un moule en fonction des zones d'accroche qui sont désirées sur la première partie de la pièce. Ainsi, avec un même moule, on peut envisager de disposer plusieurs pavés métalliques et de produire, en fonction des pavés métalliques disposés dans le moule, une grande variété de première partie de pièce. Le réseau tridimensionnel de nervures qui sont complémentaires des nervures du réseau de la première partie du pavé métallique peut être obtenu par électroérosion ou par impression tridimensionnelle de poudre métallique.

De préférence, la matière de la première partie de la pièce comporte du polypropylène, du polyamide, de l'acrylonitrile butadiène styrène, du polystyrène-b-poly(éthylène-butylène)-b-polystyrène, seuls ou en mélange.

Par ailleurs, la matière de la deuxième partie de la pièce comporte du polypropylène, du polyamide, de l'acrylonitrile butadiène styrène, du polystyrène-b-poly(éthylène-butylène)-b-polystyrène, seuls ou en mélange.

Le procédé de fabrication peut également comporter une étape, avant fabrication par impression tridimensionnelle de la deuxième partie, au cours de laquelle on applique un traitement de surface sur la première partie de la pièce. Ainsi, on peut stocker la première partie de la pièce après qu'elle ait reçu un traitement de surface. Le ou les traitements de surface sont par exemple des étapes de peinture ou de chromage de la première partie de la pièce. Le traitement de surface comprend également les étapes nécessaires à l'accroche de la peinture, du chromage ou d'un autre traitement de surface sur la première partie de la pièce.

La pièce en matière plastique peut être une pièce de carrosserie. On entend par pièce de carrosserie, aussi bien une pièce de carrosserie extérieure qu'une pièce de carrosserie intérieure. A titre d'exemple non limitatif, une pièce de carrosserie peut être une peau de pare-chocs avant ou de pare-chocs arrière, un bas de caisse, une porte, une porte de coffre, un becquet de toit ou de coffre, une aile, des pièces d'habillage intérieur du véhicule automobile.

Nous allons présenter ci-après plusieurs modes de réalisation de l'invention donnés à titre d'exemples non limitatifs en référence aux dessins sur lesquels :
- la figure 1 est une vue en coupe d'une première pièce en matière plastique obtenue par le procédé de l'invention ;
- la figure 2 est une vue à plus grande échelle d'un détail de la figure 1 montrant une vue en coupe d'un réseau tridimensionnel de nervures ;
- les figures 3 à 5 sont des vues du dessus de trois exemples de réseaux tridimensionnels de nervures ;
- la figure 6 est une vue schématique d'un moule de fabrication de la première partie de la pièce selon le procédé de l'invention ;
- la figure 7 est une vue en coupe d'une deuxième pièce en matière plastique obtenue par le procédé de l'invention ;
- la figure 8 est une vue partielle en perspective d'une troisième pièce en matière plastique obtenue par le procédé de l'invention.

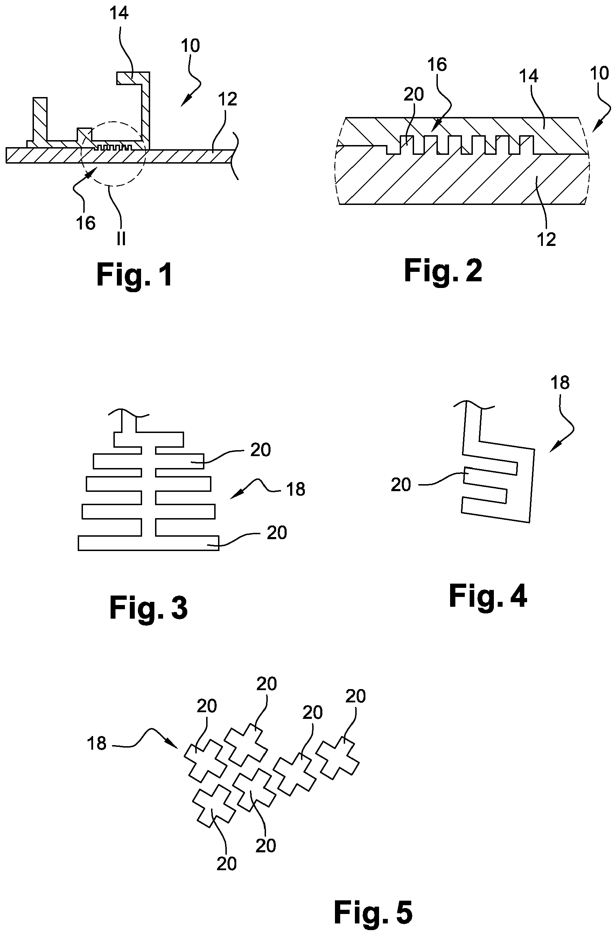

On a représenté sur la figure 1 une vue en coupe d'une pièce 10 en matière plastique pour véhicule automobile obtenue grâce au procédé de l'invention.

Cette pièce 10 comporte une première partie 12 sur laquelle est rapportée au moins une deuxième partie 14. Ces deux parties sont en matière plastique.

La première partie comporte une zone d'accroche mécanique 16 de la deuxième partie 14 sur la première partie 12.

La deuxième partie 14 de la pièce 10 peut servir de renfort mécanique à la première partie 12 de la pièce. Elle peut également permettre de fixer d'autres éléments sur la pièce 10 et/ou servir à attacher la pièce 10 sur le véhicule automobile.

Comme on peut le voir sur la figure 2 qui est une vue à plus grande échelle de la de la zone d'accroche mécanique 16 de la figure 1 ainsi que sur les figures 3 à 5, la zone d'accroche mécanique 16 comporte un réseau tridimensionnel 18 de nervures 20.

On a représenté sur les figures 3 à 6, différents modes de réalisation du réseau tridimensionnel 18. Dans ces vues du dessus, on constate que le réseau tridimensionnel 18 peut prendre des formes variées.

Les nervures 20 peuvent être agencées entre elles de sorte à former un réseau continu de nervures 20 comportant, par exemple, une pluralité de nervures 20 parallèles entre elles et reliées les unes aux autres par d'autres nervures 20, comme cela est représenté sur les figures 3 et 4.

Le réseau tridimensionnel 18 peut également être formé par des nervures 20 qui forment des croix deux à deux, les croix étant réparties sur la zone d'accroche 16, comme cela est représenté sur la figure 5.

On va maintenant décrire le procédé de fabrication de la pièce 10.

La pièce en matière plastique 10 est obtenue en fabricant la première partie 12 par moulage et en venant ensuite imprimer par la technique d'impression tridimensionnelle, directement sur la première partie 12, la deuxième partie 14.

Avantageusement, on peut prévoir des zones d'accroche mécanique 16 sur la première partie 12.

Ces zones d'accroche mécanique 16 peuvent être matérialisées sur la première partie 12 par des réseaux tridimensionnels 18 de nervures 20. Ces réseaux tridimensionnels 18 sont obtenus par la présence, dans un moule 22 de fabrication de la première pièce 12, de zones comportant un réseau tridimensionnel 24 de nervures 26 qui sont complémentaires des nervures 20 du réseau tridimensionnel 18 de la première partie 12.

De préférence, ces zones comportant un réseau tridimensionnel 24 de nervures 26 sont réalisées sur un pavé métallique 28 rapporté dans une partie 30 du moule 22 de fabrication de la première partie 12.

Ainsi, en fonction du nombre de pavé métallique 28 présents dans le moule 22 et de la présence ou non d'une zone 24 comportant un réseau tridimensionnel de nervures 26 sur ces pavés métalliques 28, on peut produire, dans un même moule 22, des premières parties 12 de pièce 10 présentant des zones d'accroche mécanique 16 disposées à différents endroits sur la première partie 12 et/ou présentant des réseaux tridimensionnels 18 de nervures 20 différents.

En effet, en remplaçant le pavé métallique 28 par un autre pavé métallique ne présentant pas une zone 24 comportant un réseau tridimensionnel de nervures 26, on obtient une première partie 12 qui, dans la zone de ce pavé métallique, ne comporte pas de réseau tridimensionnel 18 de nervures 20.

Par ailleurs, l'impression tridimensionnelle de la deuxième partie 14 sur la première partie 12 peut être réalisée après une étape de traitement de surface de la première partie, par exemple par l'application d'une ou plusieurs couches permettant l'accrochage d'une peinture sur la première partie 12 et l'application d'une couche de peinture ou de chrome.

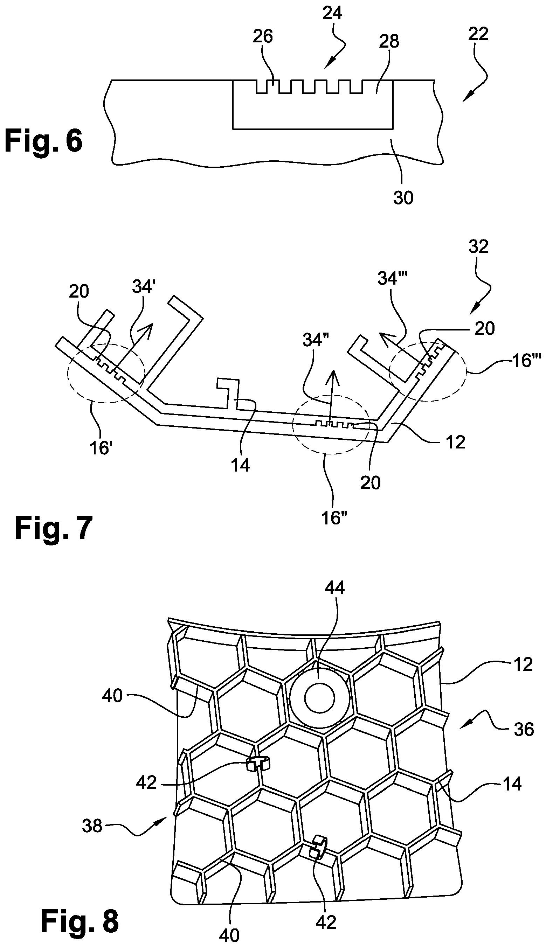

On a représenté sur la figure 7 une vue en coupe schématisée d'une pièce de carrosserie pour véhicule automobile, par exemple une peau de pare-chocs 32. On constate que cette peau de pare-chocs 32 n'est pas plane. Typiquement, cette peau de pare-chocs 32 a une épaisseur de quelques millimètres alors qu'elle peut présenter une longueur de plus d'un mètre. Aussi, la peau de pare-chocs 32 comporte une première partie 12 dite d'aspect, qui est visible de l'extérieur du véhicule et une deuxième partie 14 qui sert de renfort à la première partie 12 afin d'éviter, notamment que la peau de pare-chocs 32 se déforme et s'enfonce si on exerce une pression dessus. La deuxième partie 14 peut également comporter des éléments fonctionnels qui permettent d'accrocher la peau de pare-chocs sur le véhicule ou qui permettent d'accrocher d'autres éléments sur la peau de pare-chocs, tels que des capteur d'aide au stationnement, également désigné capteur PDC (de l'acronyme anglais Park Distance Control) qui est un capteur permettant d'évaluer la distance à un obstacle situé dans le champ de vision du capteur au même titre qu'une caméra ou un radar.

Dans cette vue en coupe, la première partie 12 comporte trois zones d'accroche mécanique 16', 16" et 16'" comportant chacune un réseau tridimensionnel 18 de nervures 20. Chaque zone d'accroche 16', 16", 16'" définit une surface ainsi qu'une normale 34', 34", 34'" à cette surface. Les normales 34', 34", 34'" ne sont pas parallèles entres elles deux à deux.

Comme au moins deux des normales 34', 34", 34'" ne sont pas parallèles entre elles, la deuxième partie 14 est indémontable de la première partie 12.

On a représenté sur la figure 8 une vue partielle en perspective d'une pièce de carrosserie 36 pour véhicule automobile. Cette pièce 36 comporte une peau en matière plastique formant la première partie 12 de la pièce 36 et une deuxième partie 14 présentant un réseau tridimensionnel 38 continu de nervures 40 en forme de nid d'abeille qui renforce mécaniquement la peau, donc de la première partie 12. Comme on peut le voir sur la figure 8, des nervures 40 portent des agrafes 42 permettant par exemple de fixer des câbles sur la pièce 36 ou de fixer la pièce 36 sur le véhicule automobile.

La deuxième partie 14 de la pièce 36 comporte également un autre élément fonctionnel 44, disposé entre des nervures 40 et rattaché à ces mêmes nervures. Cet élément 44 permet de renforcer localement la première partie 12 de la pièce 36 ainsi que de servir de moyens de fixation d'un autre élément (non représenté) sur la pièce 36.

Bien entendu, on pourra apporter à l'invention de nombreuses modifications sans sortir du cadre de celle-ci.

## Revendications

1. Procédé de fabrication d'une pièce (10, 32, 36) en matière plastique pour véhicule automobile, ladite pièce (10, 32, 36) comportant au moins une première partie (12) sur laquelle est rapportée au moins une deuxième partie (14), dans lequel on fabrique la première partie (12), dans lequel on fabrique la deuxième partie (14) de la pièce (10, 32, 36) en matière plastique par impression tridimensionnelle directement sur la première partie (12) de la pièce (10, 32, 36), et la première partie (12) de la pièce (10, 32, 36) comportant au moins une zone d'accroche mécanique (16) de la deuxième partie (14) sur la première partie (12), le procédé étant **caractérisé en ce que** la zone d'accroche mécanique (16) comporte un réseau tridimensionnel (18) de nervures (20), et au cours duquel, pour fabriquer la première partie (12) de la pièce (10, 32, 36) :
- on fabrique au moins un pavé métallique (28) comportant un réseau tridimensionnel (24) de nervures (26) qui sont complémentaires des nervures (20) du réseau tridimensionnel (18) de la première partie (12),
- on dispose le pavé métallique (28) dans un moule (22, 30) à l'endroit de la première partie (12) où on désire former le réseau tridimensionnel (18),
- on moule la première partie (12) de la pièce (10, 32, 36).

2. Procédé de fabrication selon la revendication 1, dans lequel la première partie (12) de la pièce comporte au moins deux zones d'accroche (16, 16', 16", 16'"), chaque zone d'accroche définissant une surface et une normale (34', 34", 34'") à cette surface, les deux normales (34', 34", 34'") n'étant pas parallèles entre elles.

3. Procédé de fabrication selon l'une quelconque des revendications précédentes, dans lequel la deuxième partie (14) de la pièce (10, 32, 36) comprend un élément fonctionnel (14, 42, 44) et/ou un élément de renfort (14, 38).

4. Procédé de fabrication selon l'une quelconque des revendications précédentes, dans lequel la matière de la première partie (12) de la pièce (10, 32, 36) comporte du polypropylène, du polyamide, de l'acrylonitrile butadiène styrène, du polystyrène-b-poly(éthylène-butylène)-b-polystyrène, seuls ou en mélange.

5. Procédé de fabrication selon l'une quelconque des revendications précédentes, dans lequel la matière de la deuxième partie (14) de la pièce (10, 32, 36) comporte du polypropylène, du polyamide, de l'acrylonitrile butadiène styrène, du polystyrène-b-poly(éthylène-butylène)-b-polystyrène, seuls ou en mélange.

6. Procédé de fabrication selon l'une quelconque des revendications précédentes, au cours duquel, avant fabrication par impression tridimensionnelle de la deuxième partie (14), on applique un traitement de surface sur la première partie (12) de la pièce (10, 32, 36).

7. Procédé de fabrication selon l'une quelconque des revendications précédentes, dans lequel la pièce (10, 32, 36) en matière plastique est une pièce de carrosserie.

## Patentansprüche

1. Verfahren zum Herstellen eines Teils (10, 32, 36) aus Kunststoff für Kraftfahrzeug, wobei das Teil (10, 32, 36) mindestens einen ersten Teil (12) aufweist, an dem mindestens ein zweiter Teil (14) angebracht ist, bei dem der erste Teil (12) hergestellt wird, bei dem der zweite Teil (14) des Teils (10, 32, 36) aus Kunststoff durch dreidimensionalen Druck direkt auf dem ersten Teil (12) des Teils (10, 32, 36) hergestellt wird, und der erste Teil (12) des Teils (10, 32, 36) mindestens eine Zone für den mechanischen Angriff (16) des zweiten Teils (14) an dem ersten Teil (12) aufweist, wobei das Verfahren **dadurch gekennzeichnet ist, dass** die Zone für den mechanischen Angriff (16) ein dreidimensionales Netz (18) aus Rippen (20) aufweist, und in dessen Verlauf zum Herstellen des ersten Teils (12) des Teils (10, 32, 36):
- mindestens ein Metallblock (28) mit einem dreidimensionales Netz (24) aus Rippen (26) hergestellt wird, die zu den Rippen (20) des dreidimensionales Netzes (18) des ersten Teils (12) komplementär sind,
- der Metallblock (28) in einem Formwerkzeug (22, 30) an der Stelle des ersten Teils (12) angeordnet wird, wo das dreidimensionale Netz (18) gebildet werden soll,
- der erste Teil (12) des Teils (10, 32, 36) geformt wird.

2. Herstellungsverfahren nach Anspruch 1, bei dem der erste Teil (12) des Teils mindestens zwei Angreifzonen (16, 16', 16", 16'") aufweist, wobei jede Angreifzone eine Oberfläche und eine Senkrechte (34', 34", 34'") zu dieser Oberfläche definiert, wobei die zwei Senkrechten (34', 34", 34'") zueinander nicht parallel sind.

3. Herstellungsverfahren nach einem der vorhergehenden Ansprüche, bei dem der zweite Teil (14) des Teils (10, 32, 36) ein funktionales Element (14, 42, 44) und/oder ein Verstärkungselement (14, 38) umfasst.

4. Herstellungsverfahren nach einem der vorhergehenden Ansprüche, bei dem das Material des ersten Teils (12) des Teils (10, 32, 36) Polypropylen, Polyamid, AcrylnitrilButadien-Styrol, Polystyrol-b-Poly(ethylen-Butylen)-b-Polystyrol, allein oder in Gemisch, aufweist.

5. Herstellungsverfahren nach einem der vorhergehenden Ansprüche, bei dem das Material des zweiten Teils (14) des Teils (10, 32, 36) Polypropylen, Polyamid, AcrylnitrilButadien-Styrol, Polystyrol-b-Poly(ethylen-Butylen)-b-Polystyrol, allein oder in Gemisch, aufweist.

6. Herstellungsverfahren nach einem der vorhergehenden Ansprüche, in dessen Verlauf, vor Herstellung des zweiten Teils (14) durch dreidimensionalen Druck eine Oberflächenbehandlung auf dem ersten Teil (12) des Teils (10, 32, 36) aufgebracht wird.

7. Herstellungsverfahren nach einem der vorhergehenden Ansprüche, bei dem das Teil (10, 32, 36) aus Kunststoff ein Karosserieteil ist.

## Claims

1. Method for producing a piece (10, 32, 36) made of a plastics material for a motor vehicle, said piece (10, 32, 36) having at least one first part (12) on which at least one second part (14) is mounted, the first part (12) being produced, the second part (14) of the piece (10, 32, 36) made of a plastics material being produced by three-dimensional printing directly on the first part (12) of the piece (10, 32, 36), and the first part (12) of the piece (10, 32, 36) having at least one zone (16) for mechanically attaching the second part (14) to the first part (12), the method being **characterized in that** the mechanical attachment zone (16) comprises a three-dimensional network (18) of ribs (20), and during which method, in order to produce the first part (12) of the piece (10, 32, 36):
- at least one metal block (28) having a three-dimensional network (24) of ribs (26) is produced, which ribs are complementary to the ribs (20) of the three-dimensional network (18) of the first part (12),
- the metal block (28) is placed in a mold (22, 30) at the location of the first part (12) where the three-dimensional network (18) is to be formed,
- the first part (12) of the piece (10, 32, 36) is molded.

2. Production method according to claim 1, wherein the first part (12) of the piece comprises at least two attachment zones (16, 16', 16", 16"'), each attachment zone defining a surface and a normal (34', 34", 34'") with respect to this surface, the two normals (34', 34", 34'") not being parallel to each other.

3. Production method according to either of the preceding claims, wherein the second part (14) of the piece (10, 32, 36) comprises a functional element (14, 42, 44) and/or a reinforcing element (14, 38).

4. Production method according to any one of the preceding claims, wherein the material of the first part (12) of the piece (10, 32, 36) comprises polypropylene, polyamide, acrylonitrile butadiene styrene, polystyrene-b-poly (ethylene-butylene)-b-polystyrene, alone or in combination.

5. Production method according to any one of the preceding claims, wherein the material of the second part (14) of the piece (10, 32, 36) comprises polypropylene, polyamide, acrylonitrile butadiene styrene, polystyrene-b-poly (ethylene-butylene)-b-polystyrene, alone or in combination.

6. Production method according to any one of the preceding claims, during which, before the second part (14) is produced by means of three-dimensional printing, a surface treatment is applied to the first part (12) of the piece (10, 32, 36).

7. Production method according to any one of the preceding claims, wherein the piece (10, 32, 36) made of a plastics material is a bodywork component.
